# EUROPÄISCHE PATENTSCHRIFT

(11) **EP 4 268 070 B1**
(45) Veröffentlichungstag und Bekanntmachung des Hinweises auf die Patenterteilung: **27.11.2024**
(21) Anmeldenummer: 22707079.4
(22) Anmeldetag: 17.02.2022
(51) Int. Cl.: G06F 9/445

(54) **VERFAHREN ZUR KONFIGURATION EINER STEUERUNGSSOFTWARE BEI EINEM SCHIENENFAHRZEUG**
METHOD FOR CONFIGURATION OF CONTROL SOFTWARE IN A RAIL VEHICLE
PROCÉDÉ DE CONFIGURATION D'UN LOGICIEL DE COMMANDE POUR UN VÉHICULE FERROVIAIRE

(30) Priorität: 26.02.2021 DE 102021201837
(43) Veröffentlichungstag der Anmeldung: 01.11.2023
(73) Patentinhaber: Siemens Mobility GmbH, 81739 München (DE)
(72) Erfinder: WEBER, Matthias Alexander, 91080 Uttenreuth (DE)
(74) Vertreter: Siemens Patent Attorneys
(86) Internationale Anmeldenummer: PCT/EP2022/053975
(87) Internationale Veröffentlichungsnummer: WO 2022/179934

(56) Entgegenhaltungen:
- US-A1- 2016 001 720
- US-A1- 2020 044 868

## Beschreibung

Verfahren zur Konfiguration einer Steuerungssoftware bei einem Schienenfahrzeug.

Die Erfindung betrifft ein Verfahren zur Konfiguration einer Steuerungssoftware bei einem Schienenfahrzeug, das sich bevorzugt bereits im operativen Betrieb befindet.

Das Verhalten eines Schienenfahrzeugs wird über Fahrzeugsoftware bzw. über Steuerungssoftware bestimmt. Diese ist für einen Schienenfahrzeugtyp speziell entwickelt und für diesen nachvollziehbar als Softwarerelease bezeichnet, geprüft und zugelassen.

Die Software wird vor bzw. im Zuge der Auslieferung des Schienenfahrzeugs auf dieses aufgespielt und ist bei Auslieferung an einen Kunden fester Bestandteil des Schienenfahrzeugs.

Kundenseitig gewünschte Änderungen bzw. Anpassungen der Software bedingen eine kostenintensive Neuentwicklung bzw. Ergänzung der Software mit nachfolgender erneuter Prüfung und Zulassung samt Inbetriebnahme der Software beim Schienenfahrzeug des Kunden.

Entsprechend geänderte Fahrzeug- bzw. Steuerungssoftware wird nach erfolgter Zulassung vor Ort und mit Hilfe von Service-Personal auf das jeweilige Schienenfahrzeug "aufgespielt" bzw. in den entsprechenden programmierbaren Komponenten installiert.

Je nach Umfang der Software-Änderung muss nach erfolgter Inbetriebsetzung ein sogenannter Non-Regression-Test in einer geeigneten Test-Infrastruktur durchgeführt werden.

Dieses Verfahren zur Software-Änderung ist bezüglich des Aufwands intensiv an Zeit, Personal sowie an Kosten.

Aus der Druckschrift US 2020/0044868 A1 ist ein Verfahren zur selektiven Aktivierung und Konfiguration von Komponenten bekannt, bei dem ein hergestelltes elektronisches Gerät mindestens eine Hardwarekomponente enthält, die gesperrt oder deaktiviert ist. Ein Endbenutzer des elektronischen Geräts nutzt eine computergestützte Plattform oder eine Cloud-basierte Plattform, um die Aktivierung oder Aktualisierung dieser Hardwarekomponente anzufordern.

Aus der Druckschrift US 2016/001720 A1 ist ein Automobil bekannt, das als Mietfahrzeug über Funktionen verfügt, die drahtlos aktiviert oder deaktiviert werden können. Zusätzliche Funktionen können erworben und aktiviert werden, nachdem ein Kunde für einen anfänglichen Satz von Funktionen bezahlt und mit der Nutzung des Fahrzeugs begonnen hat. Die Konfiguration des Fahrzeugs wird automatisiert, indem eine Konfigurationsnachricht an das Fahrzeug gesendet wird.

Es ist daher die Aufgabe der vorliegenden Erfindung, ein verbessertes Verfahren zur Anpassung bzw. zur Konfiguration einer Fahrzeug- bzw. Steuerungssoftware bei einem Schienenfahrzeug anzugeben.

Diese Aufgabe wird durch die Merkmale des Anspruchs 1 sowie des Anspruchs 11 gelöst. Vorteilhafte Weiterbildungen sind in den abhängigen Ansprüchen angegeben.

Die Erfindung betriff ein Verfahren zur Konfiguration einer Fahrzeugsoftware bzw. einer Steuerungssoftware bei einem Schienenfahrzeug sowie ein Schienenfahrzeug mit einer Steuerungssoftware.

Erfindungsgemäß werden in der Software neben Grundfunktionen weitere Funktionen zusätzlich aufgenommen, die optional aktivierbar bzw. deaktivierbar sind und mit denen kundenspezifische Wünsche bzw. ein kundenspezifisches Anforderungsprofil Einzelfahrzeug-spezifisch adressierbar sind.

Die Grundfunktionen beschreiben dabei die für den Grundbetrieb des Schienenfahrzeugs benötigten Software-Anteile, beispielsweise Funktionen,
- die den Antrieb bzw. dessen Steuerung betreffen,
- die die Bremsen bzw. deren Steuerung betreffen,
- etc.

Die optionalen Funktionen beschreiben dabei Funktionen, die nach Kundenwunsch bzw. nach kundenspezifischem Anforderungsprofil auch nach Auslieferung des Schienenfahrzeugs auswählbar bzw. beeinflussbar sind. Dabei handelt es sich beispielsweise um eine aktivierbare bzw. deaktivierbare Funktion
- die einen Betriebsmodus "Waschfahrt des Schienenfahrzeugs" betrifft bzw. diesen Betriebsmodus ermöglicht und adressiert,
- die eine Einstellung bzw. Vorgabe einer maximalen Geschwindigkeit des Schienenfahrzeugs ermöglicht bzw. betrifft,
- die ein Freischalten spezifischer Leistungserhöhungen des Schienenfahrzeugs ermöglicht bzw. betrifft,
- die ein Freischalten eines Fahrerassistenz-Systems ermöglicht bzw. betrifft,
- etc.

Die Grundfunktionen und die optionalen Funktionen werden in ihren Ausprägungen, Kombinationen und Funktionsabläufen vor der Implementierung im Schienenfahrzeug seitens des Herstellers bzw. seitens beauftragter Stellen getestet, validiert und zugelassen.

Wichtig ist in diesem Zusammenhang, dass die Grundfunktionen und die optionalen Funktionen Fahrzeugtyp- und Einzelfahrzeug-spezifisch zugelassen werden, während die optionalen Funktionen zusätzlich Einzelfahrzeug-spezifisch aktivierbar bzw. deaktivierbar sind.

Die optionalen Funktionen werden durch individuell zugeordnete Parameter aktiviert bzw. deaktiviert sowie, wenn nötig, durch gesetzte Parameter in ihrem Ablauf bzw. in ihrem Ergebnis beeinflusst.

Diese Parameter werden nachfolgend als Schaltparameter bezeichnet und sind als Werteparameter bzw. als Parameterfelder ausgebildet.

Mit Hilfe eines Werteparameters erfolgt eine Aktivierung bzw. Deaktivierung einer zugeordneten optionalen Funktion in einem ausgewählten Schienenfahrzeug, während mit Hilfe eines Parameterfelds neben der Aktivierung bzw. Deaktivierung einer zugeordneten optionalen Funktion zusätzlich deren interner Ablauf bei einem ausgewählten Schienenfahrzeug beeinflusst wird.

Um die funktionale Sicherheit der Software beim ausgewählten Schienenfahrzeug sicherzustellen, werden die Schaltparameter einzeln oder als Datei Einzelfahrzeug-spezifisch verschlüsselt und an das ausgewählte Schienenfahrzeug übertragen.

Dadurch werden unerlaubte Manipulationen verhindert bzw. wird eine unbefugte Vervielfältigung der Schaltparameter für weitere Schienenfahrzeuge unterbunden.

Nur das ausgewählte Schienenfahrzeug ist dann in der Lage, die Entschlüsselung fahrzeugseitig durchzuführen, um die Schaltparameter anwenden zu können.

In einer bevorzugten Weiterbildung wird dazu eine individuelle Identifikationsnummer des Schienenfahrzeugs verwendet.

Erfindungsgemäß wird dazu eine individuelle Identifikationsnummer des Schienenfahrzeugs verwendet.

In einer bevorzugten Weiterbildung wird als individuelle Identifikationsnummer die sogenannte "UIC-Kennzeichnung" verwendet, die seit Anfang 2007 bei der Zulassung von Triebfahrzeugen in Deutschland verwendet wird.

Die UIC-Kennzeichnung besteht aus einer zwölfstelligen Nummer, die das Schienenfahrzeug in einem EU-weiten Fahrzeugeinstellungsregister eindeutig identifiziert. Dabei beschreiben die ersten beiden Ziffern einen Bauartcode, während die nächsten beiden Ziffern ein Herkunftsland beschreiben. Weitere Ziffern der Ordnungszahlen 5 bis 11 sind von jedem EU-Land frei definierbar, worauf eine weitere Ziffer als Prüfziffer folgt. Den Abschluss bilden ein Länderkürzel und ein Kürzel für den Fahrzeughalter.

Erfindungsgemäß werden die Schaltparameter seitens des Herstellers bzw. seitens des Vertriebes des Schienenfahrzeugs inhaltlich ausgewählt bzw. festgelegt. Damit wird ein intelligentes Flottenmanagement ermöglicht, bei dem ausgewählte Schienenfahrzeuge an spezifische Aufgaben nach Kundenvorgaben bzw. nach Vorgabe eines kundenspezifischen Anforderungsprofils angepasst werden.

In einer vorteilhaften Weiterbildung erfolgt die Festlegung der Schaltparameter unter Verwendung Software-gestützter Werkzeuge, die es beispielsweise den Vertriebsmitarbeitern ermöglicht, zulässige Schaltparameter für entsprechende Funktionen auszuwählen, als Schaltparametersatz zu befüllen und diese abzuspeichern.

In einer vorteilhaften Weiterbildung werden die Schaltparameter in Form einer Datei abgespeichert, die für Steuergeräte des Schienenfahrzeugs unmittelbar verarbeitbar ist.

In einer vorteilhaften Weiterbildung wird die Datei mit den Schaltparametern über einen Kommunikationskanal zur Implementierung im Schienenfahrzeug übertragen.

Die Übertragung ist entweder an einen Service-Techniker gerichtet, der die Datei beispielsweise via Email oder über eine Cloud-basierte Datenübertragung erhält, oder die Datei-Übertragung ist direkt an das betroffene Schienenfahrzeug gerichtet, das die Datei empfängt und dessen Steuergeräte die Datei dann bevorzugt automatisiert umsetzen.

In einer bevorzugten Weiterbildung wird die Übertragung der Datei mit den Schaltparametern verschlüsselt durchgeführt, um Verfälschungen, Übertragungsfehler bzw. Security-Angriffe zu verhindern. Dazu wird beispielsweise ein Public-Key-Verfahren verwendet.

In einer vorteilhaften Weiterbildung wird die Datei mit den Schaltparametern auf einem Rechner des Schienenfahrzeugs zwischengespeichert. Dies dient der Status-Dokumentation der Software und bildet eine Rückfalleben, mit der die Fahrzeugsicherheit erhöht wird.

In einer vorteilhaften Weiterbildung wird die gesamte Steuerungstechnik, die mehrere Steuergeräte zur Parametrierung umfasst, eines betrachteten Schienenfahrzeugs über die Datei adressiert bzw. beeinflusst. Pro Schienenfahrzeug wird dann genau eine Datei mit Schaltparametern erstellt und im Schienenfahrzeug angewendet, deren Inhalt auf die zugehörigen Steuergeräte verteilt wird. Damit wird ein notwendiger Handhabungsaufwand minimiert.

In einer vorteilhaften Weiterbildung fragen die Steuergeräte beim Neustart bzw. beim Hochlaufen ("booten") an einer zentralen Stelle des Schienenfahrzeugs oder einer landseitigen Kontrollstation nach, ob für das zugehörige Schienenfahrzeug neue Schaltparameter vorliegen.

In einer vorteilhaften Weiterbildung wird diese Nachfrage mit Hilfe eines Umschalt-Managers koordiniert, um eine unkoordinierte Aktivierung der Schaltparameter in den zugehörigen Funktionen zu verhindern bzw. um mit Blick auf zeitliche Abläufe eine zuverlässige Aktivierung bzw. Deaktivierung der optionalen Funktionen zu ermöglichen.

In einer bevorzugten Weiterbildung verwendet der Umschalt-Manager dazu ein Verfahren, um Fingerabdrücke eines aktuell verwendeten Schaltparameter-Satzes sowie eines neu empfangenen Schaltparameter-Satzes zu bilden.

Zur Bildung der Fingerabdrücke kommt beispielsweise ein "Message-Digest Algorithm 5, MD5"-Verfahren oder ein CRC-Verfahren in Betracht, mit dem ein Schaltparameter-Satz inhaltlich eindeutig identifizierbar ist.

Die Fingerabdrücke werden zusammen mit einem zugehörigen Empfangsdatum an die zentrale Stelle übermittelt. Diese Stelle wählt dann als gültigen Schaltparameter-Satz denjenigen aus, dessen Fingerabdruck über alle Steuergeräte gleich ist sowie das jüngste Empfangsdatum aufweist und übermittelt die Entscheidung an das Steuergerät des Schienenfahrzeugs bzw. an die zugehörigen Steuergeräte.

In einer bevorzugten Weiterbildung erfolgt die Aktivierung bzw. Deaktivierung der optionalen Funktion in einem sicheren Zustand des Schienenfahrzeugs, bevorzugt im Stillstand und/oder in einer vorab definierten Fahrzeug-Umgebung.

Beim Neustart der Steuergeräte wird dann der neue Schaltparametersatz geladen, um den konfigurierten Funktionsumfang der Fahrzeug- bzw. der Steuerungssoftware zur Verfügung zu stellen.

In einer bevorzugten Weiterbildung erhält ein Triebfahrzeugführer des Schienenfahrzeugs eine Meldung, dass der Funktionsumfang der Software geändert bzw. konfiguriert wurde.

Bevorzugt wird dem Triebfahrzeugführer ein Veto-Recht eingeräumt, so dass er die Software-Konfiguration annehmen oder ablehnen kann.

Eine Ablehnungs-Entscheidung wird bevorzugt einmalig eingeholt und danach als dauerhafte Ablehnung bewertet, d.h. eine Ablehnungsentscheidung bleibt auch einem zukünftigen Neustart der Steuergeräte erhalten.

Alternativ dazu wird die Entscheidung des Triebfahrzeugführers bei jedem Neustart der Steuergeräte des Fahrzeugs erneut abgefragt.

In einer bevorzugten Weiterbildung erhält ein Triebfahrzeugführer des Schienenfahrzeugs an einem Display eine Liste der aktivierten optionalen Funktionen bzw. der zugehörigen Parameter angezeigt.

Eine Beeinflussung der gesetzten optionalen Funktionen durch den Triebfahrzeugführer ist nicht möglich. Diese Aufgabe obliegt bevorzugt dem Flottenmanagement.

In einer bevorzugten Weiterbildung bleibt ein bisheriger Schaltparameter-Satz gültig bzw. aktiv, wenn nicht alle Steuergeräte den neuen Schaltparameter-Satz einheitlich übernehmen.

In einer bevorzugten Weiterbildung wird bei einem Austausch eines Steuergeräts bzw. bei einer Ausgruppierung eines Steuergeräts ein Neustart der Steuergeräte der Leittechnik initialisiert, um die Übernahme aktuell gültiger Schaltparameter zu gewährleisten.

Durch das erfindungsgemäße Verfahren wird es dem Vertrieb, dem Hersteller bzw. dem Flottenmanagement eines Schienenfahrzeugs ermöglicht, vom Kunden gewünschte Funktionen bei bereits ausgelieferten Fahrzeugen nachträglich zu aktivieren, ohne dabei technische Fachabteilungen einbinden zu müssen.

Durch das erfindungsgemäße Verfahren wird es dem Vertrieb, dem Hersteller bzw. dem Flottenmanagement eines Schienenfahrzeugs ermöglicht, die Steuerungssoftware bei bereits ausgelieferten Fahrzeugen nachträglich in einem vorbestimmten Rahmen und dabei reaktionsschnell zu konfigurieren.

Durch das erfindungsgemäße Verfahren wird die Software-Konfiguration entweder mittels Service-Personal vor Ort oder unter Verwendung einer Datenfernübertragung durchführbar bzw. ermöglicht.

Durch das erfindungsgemäße Verfahren wird die Software-Konfiguration sowohl unter funktionalen als auch unter Sicherheitsaspekten zuverlässig durchführbar.

Durch das erfindungsgemäße Verfahren kann auf Kundenwünsche deutlich schneller reagiert werden, indem vordefinierte Parameter in Funktionen gesetzt werden bzw. indem bereits zugelassene Funktionen aktiviert werden.

Durch das erfindungsgemäße Verfahren werden Kosten reduziert, da eine Software-Konfiguration direkt, d.h. ohne Einbindung von nachträglichen Engineering-Leistungen, sowie ohne nachträgliche Validierung der Software bzw. ohne Neuzulassung der Software erfolgen kann.

Durch das erfindungsgemäße Verfahren werden bislang notwendige Non-Regression-Tests in einer dafür benötigten Test-Infrastruktur zumindest reduziert bzw. komplett vermieden.

Nachfolgend wird die Erfindung beispielhaft anhand einer Zeichnung näher erläutert. Dabei zeigt:

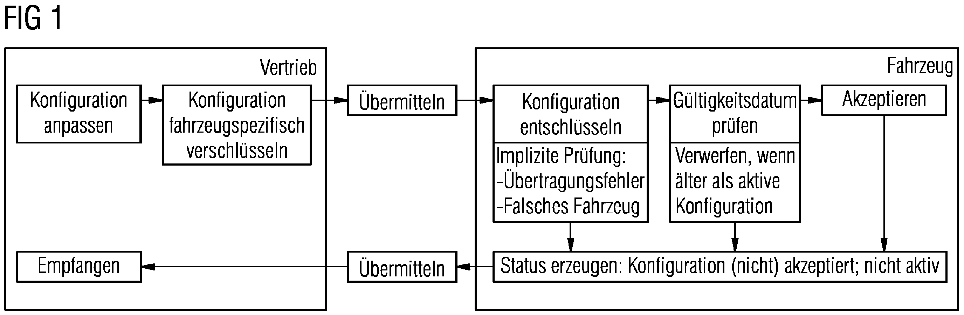

FIG 1 eine selbsterklärende Darstellung einer seitens des Vertriebs gebildeten Software-Konfiguration sowie deren Implementierung seitens eines Fahrzeugs bzw. Schienenfahrzeugs gemäß der vorliegenden Erfindung.

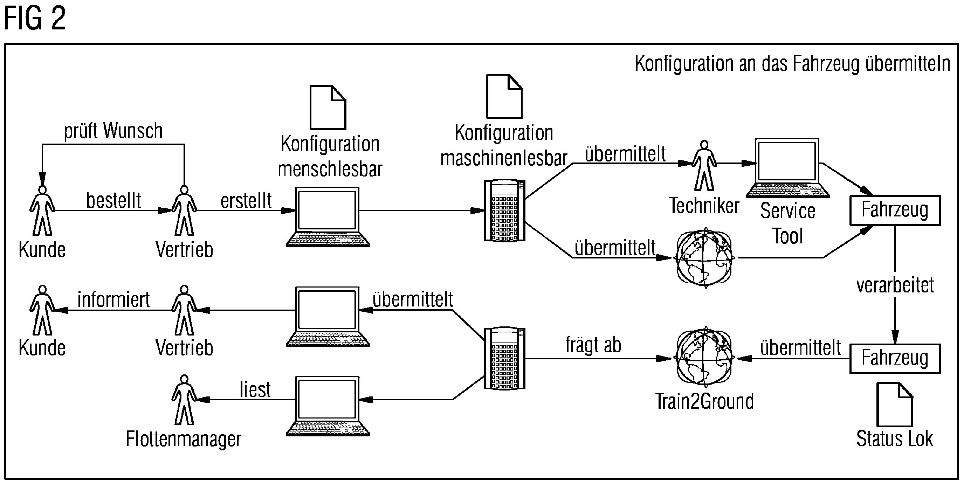

FIG 2 eine selbsterklärende Darstellung des Zusammenwirkens zwischen Kunden, Vertrieb und Fahrzeug bzw. Schienenfahrzeug gemäß der vorliegenden Erfindung.

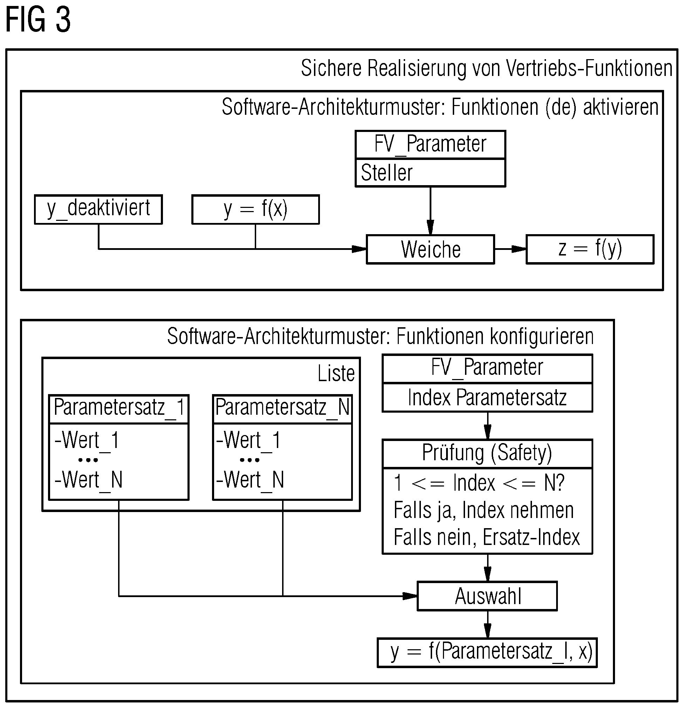

FIG 3 eine selbsterklärende Ausgestaltung einer Aktivierung bzw. Deaktivierung einer optionalen Funktion gemäß der vorliegenden Erfindung.

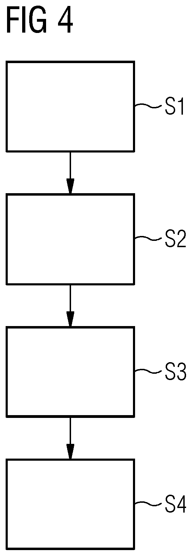

FIG 4 zeigt eine Gesamtsicht der vorliegenden Erfindung anhand eines Ablaufdiagramms.

In einem ersten Schritt S1 werden in einer Steuerungssoftware, die für eine Vielzahl an Schienenfahrzeugen bestimmt ist, Grundfunktionen implementiert, die für den Grundbetrieb der Schienenfahrzeuge benötigt werden. In der Steuerungssoftware werden optionale Funktionen implementiert, die zur Durchführung von kundenspezifischen Wünschen benötigt werden.

In einem zweiten Schritt S2 werden die Grundfunktionen und die optionalen Funktionen in ihren Ausprägungen, Kombinationen und Funktionsabläufen vor Implementierung der Steuerungssoftware in den Schienenfahrzeugen seitens des Herstellers bzw. seitens beauftragter Stellen getestet, validiert und zugelassen.

In einem dritten Schritt S3 werden die Grundfunktionen und die optionalen Funktionen als Steuerungssoftware in den Schienenfahrzeugen implementiert.

In einem vierten Schritt S4 wird bei einem ausgewählten Schienenfahrzeug zumindest eine optionale Funktion unter Verwendung eines Schaltparameters, der der optionalen Funktion individuell zugeordnet ist, aktiviert bzw. deaktiviert.

Der benötigte Schaltparameter wird basierend auf Kundenwünschen außerhalb des Schienenfahrzeugs erstellt und nachfolgend zum ausgewählten Schienenfahrzeug übertragen.

Die Schaltparameter-Übertragung erfolgt Einzelfahrzeug-spezifisch verschlüsselt an das ausgewählte Schienenfahrzeug.

Zur Einzelfahrzeug-spezifischen Verschlüsselung wird eine individuelle Identifikationsnummer des Schienenfahrzeugs verwendet.

Die Aktivierung bzw. Deaktivierung der optionalen Funktion erfolgt bei einem Schienenfahrzeug, das sich im operativen Betrieb befindet.

Die Festlegung des Schaltparameters erfolgt unter Verwendung Software-gestützter Werkzeuge, die nur eine zulässige Schaltparameter-Auswahl für entsprechende Funktionen erlaubt.

Die Schaltparameter werden einzeln oder in Form einer Datei abgespeichert bzw. übertragen, die für Steuergeräte des ausgewählten Schienenfahrzeugs unmittelbar verarbeitbar ist.

Die Schaltparameter werden über einen Kommunikationskanal an einen Service-Techniker übertragen werden, der die Steuerungssoftware im ausgewählten Schienenfahrzeug aktualisiert, oder sie werden direkt an das ausgewählte Schienenfahrzeug übertragen, wobei dessen Steuergeräte diese automatisiert in der Steuerungssoftware umsetzen.

Die Steuergeräte des Schienenfahrzeugs fragen bei der Inbetriebnahme an einer zentralen Stelle des Schienenfahrzeugs oder an einer landseitigen Kontrollstation nach, ob für das zugehörige Schienenfahrzeug neue Schaltparameter vorliegen.

Die Nachfrage wird mit Hilfe eines Umschalt-Managers koordiniert, um eine koordinierte Aktivierung bzw. Deaktivierung von optionalen Funktionen oder der Schaltparameter in zugehörigen optionalen Funktionen zu ermöglichen.

Die Aktivierung bzw. Deaktivierung der optionalen Funktion erfolgt in einem sicheren Zustand des Schienenfahrzeugs, bevorzugt im Stillstand oder in einer vorab definierten Fahrzeug-Umgebung.

Dem Triebfahrzeugführer des Schienenfahrzeugs wird ein Veto-Recht eingeräumt, um eine Steuerungssoftware-Konfiguration mit Bezug auf die optionale Funktion abzulehnen.

## Patentansprüche

1. Verfahren zur Konfiguration einer Steuerungssoftware bei einem Schienenfahrzeug,
- bei dem in einer Steuerungssoftware, die für eine Vielzahl an Schienenfahrzeugen bestimmt ist, Grundfunktionen implementiert werden, die für den Grundbetrieb der Schienenfahrzeuge benötigt werden,
- bei dem in der Steuerungssoftware optionale Funktionen implementiert werden, die zur Durchführung einer Vielzahl von kundenspezifischen Anforderungsprofilen benötigt werden,
- bei dem die Grundfunktionen und die optionalen Funktionen in ihren Ausprägungen, Kombinationen und Funktionsabläufen vor Implementierung der Steuerungssoftware in den Schienenfahrzeugen getestet, validiert und zugelassen werden,
- bei dem die Grundfunktionen und die optionalen Funktionen als Steuerungssoftware nachfolgend in den Schienenfahrzeugen implementiert werden,
- bei dem bei einem ausgewählten Schienenfahrzeug zumindest eine optionale Funktion unter Verwendung eines Schaltparameters, der der optionalen Funktion individuell zugeordnet ist, aktiviert bzw. deaktiviert wird,
- bei dem der dazu benötigte Schaltparameter basierend auf einem speziellen kundenspezifischen Anforderungsprofil außerhalb des Schienenfahrzeugs erstellt und nachfolgend zum ausgewählten Schienenfahrzeug übertragen wird,
- wobei zugeordnete Schaltparameter seitens des Herstellers des Schienenfahrzeugs inhaltlich ausgewählt und festgelegt werden, um ein Flottenmanagement zu ermöglichen, bei dem ausgewählte Schienenfahrzeuge an spezifische Aufgaben nach Vorgabe des kundenspezifischen Anforderungsprofils angepasst werden,
- bei dem die Schaltparameter-Übertragung Einzelfahrzeug-spezifisch verschlüsselt an das ausgewählte Schienenfahrzeug erfolgt,
- bei dem zur Einzelfahrzeug-spezifischen Verschlüsselung eine individuelle Identifikationsnummer des Schienenfahrzeugs verwendet wird, so dass nur das ausgewählte Schienenfahrzeug in der Lage ist, die Entschlüsselung fahrzeugseitig durchzuführen, um die Schaltparameter anzuwenden.

2. Verfahren nach Anspruch 1, bei dem die Aktivierung bzw. Deaktivierung der optionalen Funktion bei einem Schienenfahrzeug erfolgt, das sich im operativen Betrieb befindet.

3. Verfahren nach einem der vorhergehenden Ansprüche, bei dem die Festlegung des Schaltparameters unter Verwendung Software-gestützter Werkzeuge erfolgt, die nur eine zulässige Schaltparameter-Auswahl für entsprechende Funktionen erlaubt.

4. Verfahren nach einem der vorhergehenden Ansprüche, bei dem Schaltparameter einzeln oder in Form einer Datei abgespeichert werden, die für Steuergeräte des ausgewählten Schienenfahrzeugs unmittelbar verarbeitbar ist.

5. Verfahren nach Anspruch 4, bei dem Schaltparameter verschlüsselt sind, so dass eine Entschlüsselung ausschließlich seitens des ausgewählten Schienenfahrzeugs durchführbar ist.

6. Verfahren nach einem der vorhergehenden Ansprüche, bei dem Schaltparameter über einen Kommunikationskanal
- und über eine Schnittstelle an einen Service-Techniker übertragen werden, der die Steuerungssoftware im ausgewählten Schienenfahrzeug aktualisiert, oder
- direkt an das ausgewählte Schienenfahrzeug übertragen werden, wobei dessen Steuergeräte diese automatisiert in der Steuerungssoftware umsetzen.

7. Verfahren nach einem der vorhergehenden Ansprüche, bei dem Steuergeräte des Schienenfahrzeugs bei der Inbetriebnahme an einer zentralen Stelle des Schienenfahrzeugs oder an einer landseitigen Kontrollstation nachfragen, ob für das zugehörige Schienenfahrzeug neue Schaltparameter vorliegen.

8. Verfahren nach Anspruch 7, bei dem die Nachfrage mit Hilfe eines Umschalt-Managers koordiniert wird, um eine koordinierte Aktivierung bzw. Deaktivierung von optionalen Funktionen oder der Schaltparameter in zugehörigen optionalen Funktionen zu ermöglichen.

9. Verfahren nach einem der vorhergehenden Ansprüche, bei dem die Aktivierung bzw. Deaktivierung der optionalen Funktion in einem sicheren Zustand des Schienenfahrzeugs erfolgt, bevorzugt im Stillstand oder in einer vorab definierten Fahrzeug-Umgebung.

10. Verfahren nach einem der vorhergehenden Ansprüche, bei dem einem Triebfahrzeugführer des Schienenfahrzeugs ein Veto-Recht eingeräumt wird, um eine Steuerungssoftware-Konfiguration mit Bezug auf die optionale Funktion abzulehnen.

11. Schienenfahrzeug mit einer Steuerungssoftware,
- bei dem die Steuerungssoftware, die für eine Vielzahl an Schienenfahrzeugen bestimmt ist, Grundfunktionen aufweist, die für den Grundbetrieb des Schienenfahrzeugs bestimmt sind,
- bei dem die Steuerungssoftware optionale Funktionen aufweist, die zur Durchführung einer Vielzahl von kundenspezifischen Anforderungsprofilen bestimmt sind,
- wobei die Grundfunktionen und die optionalen Funktionen in ihren Ausprägungen, Kombinationen und Funktionsabläufen vor einer Implementierung der Steuerungssoftware im Schienenfahrzeug getestet, validiert und zugelassen wurden,
- bei dem zumindest eine optionale Funktion unter Verwendung eines Schaltparameters, der der optionalen Funktion individuell zugeordnet ist, aktivierbar bzw. deaktivierbar ist,
- bei dem der dazu benötigte Schaltparameter basierend auf einem speziellen kundenspezifischen Anforderungsprofil außerhalb des Schienenfahrzeugs erstellbar und nachfolgend zum ausgewählten Schienenfahrzeug zur Konfiguration der Steuerungssoftware übertragbar ist, und
- wobei zugeordnete Schaltparameter seitens des Herstellers des Schienenfahrzeugs inhaltlich auswählbar und festlegbar sind, um ein Flottenmanagement zu ermöglichen, bei dem ausgewählte Schienenfahrzeuge an spezifische Aufgaben nach Vorgabe des kundenspezifischen Anforderungsprofils angepasst werden,
- bei dem die Schaltparameter-Übertragung Einzelfahrzeug-spezifisch verschlüsselt an das ausgewählte Schienenfahrzeug durchführbar ist,
- bei dem zur Einzelfahrzeug-spezifischen Verschlüsselung eine individuelle Identifikationsnummer des Schienenfahrzeugs verwendbar ist, so dass nur das ausgewählte Schienenfahrzeug in der Lage ist, die Entschlüsselung fahrzeugseitig durchzuführen, um die Schaltparameter anzuwenden.

12. Schienenfahrzeug nach Anspruch 11, bei dem die Aktivierung bzw. Deaktivierung der optionalen Funktion bei einem Schienenfahrzeug vornehmbar ist, das sich im operativen Betrieb befindet.

13. Schienenfahrzeug nach Anspruch 11 oder 12, bei dem die Festlegung des Schaltparameters unter Verwendung Software-gestützter Werkzeuge durchführbar ist, die nur eine zulässige Schaltparameter-Auswahl für entsprechende Funktionen erlauben.

14. Schienenfahrzeug nach einem der Ansprüche 11 bis 13, bei dem Schaltparameter einzeln oder in Form einer Datei abgespeichert sind, die für Steuergeräte des ausgewählten Schienenfahrzeugs unmittelbar verarbeitbar ist.

15. Schienenfahrzeug nach Anspruch 14, bei dem Schaltparameter verschlüsselt sind, so dass eine Entschlüsselung ausschließlich seitens des ausgewählten Schienenfahrzeugs durchführbar ist.

16. Schienenfahrzeug nach einem der Ansprüche 11 bis 15, bei dem Schaltparameter über einen Kommunikationskanal
- und über eine Schnittstelle an einen Service-Techniker übertragbar sind, der die Steuerungssoftware im ausgewählten Schienenfahrzeug aktualisiert, oder
- direkt an das ausgewählte Schienenfahrzeug übertragbar sind, wobei dessen Steuergeräte diese automatisiert in der Steuerungssoftware umsetzen.

17. Schienenfahrzeug nach einem der Ansprüche 11 bis 16, bei dem Steuergeräte des Schienenfahrzeugs bei der Inbetriebnahme derart geschaltet sind, dass diese an einer zentralen Stelle des Schienenfahrzeugs oder an einer landseitigen Kontrollstation nachfragen, ob für das zugehörige Schienenfahrzeug neue Schaltparameter vorliegen.

## Claims

1. Method for configuring control software in a rail vehicle,
- in which basic functions which are needed for the basic operation of the rail vehicles are implemented in control software intended for a multiplicity of rail vehicles,
- in which optional functions which are needed to implement a multiplicity of customer-specific requirements profiles are implemented in the control software,
- in which the embodiments, combinations and functional sequences of the basic functions and the optional functions are tested, validated and approved before the control software is implemented in the rail vehicles,
- in which the basic functions and the optional functions are subsequently implemented as control software in the rail vehicles,
- in which, in a selected rail vehicle, at least one optional function is activated and/or deactivated using a switching parameter individually assigned to the optional function,
- in which the switching parameter required for this purpose is created outside the rail vehicle on the basis of a special customer-specific requirements profile and is subsequently transmitted to the selected rail vehicle,
- the content of assigned switching parameters being selected and determined by the manufacturer of the rail vehicle in order to enable fleet management in which selected rail vehicles are adapted to specific tasks according to the specification of the customer-specific requirements profile,
- in which the switching parameters are transmitted to the selected rail vehicle in encrypted form and in a manner specific to the individual vehicle,
- in which an individual identification number of the rail vehicle is used for the encryption which is specific to the individual vehicle, with the result that only the selected rail vehicle is able to carry out the decryption in the vehicle in order to apply the switching parameters.

2. Method according to Claim 1, in which the optional function is activated and/or deactivated in a rail vehicle which is in operation.

3. Method according to one of the preceding claims, in which the switching parameter is determined using software-supported tools which allow only a permissible switching parameter selection for corresponding functions.

4. Method according to one of the preceding claims, in which switching parameters are stored individually or in the form of a file which can be directly processed by control devices of the selected rail vehicle.

5. Method according to Claim 4, in which switching parameters are encrypted, with the result that decryption can be carried out solely by the selected rail vehicle.

6. Method according to one of the preceding claims, in which switching parameters are transmitted via a communication channel
- and via an interface to a service engineer who updates the control software in the selected rail vehicle, or
- are transmitted directly to the selected rail vehicle, the control devices thereof automatically implementing said switching parameters in the control software.

7. Method according to one of the preceding claims, in which control devices of the rail vehicle, during start-up, inquire, at a central entity of the rail vehicle or at a landside control station, whether there are new switching parameters for the associated rail vehicle.

8. Method according to Claim 7, in which the inquiry is coordinated with the aid of a changeover manager in order to enable coordinated activation and/or deactivation of optional functions or of the switching parameters in associated optional functions.

9. Method according to one of the preceding claims, in which the optional function is activated and/or deactivated in a safe state of the rail vehicle, preferably at a standstill or in a predefined vehicle environment.

10. Method according to one of the preceding claims, in which a veto right is granted to a traction vehicle driver of the rail vehicle in order to reject a control software configuration with respect to the optional function.

11. Rail vehicle having control software,
- in which the control software intended for a multiplicity of rail vehicles has basic functions which are intended for the basic operation of the rail vehicle,
- in which the control software has optional functions which are intended to implement a multiplicity of customer-specific requirements profiles,
- the embodiments, combinations and functional sequences of the basic functions and the optional functions having been tested, validated and approved before the control software is implemented in the rail vehicle,
- in which at least one optional function can be activated and/or deactivated using a switching parameter individually assigned to the optional function,
- in which the switching parameter required for this purpose can be created outside the rail vehicle on the basis of a special customer-specific requirements profile and can subsequently be transmitted to the selected rail vehicle for the purpose of configuring the control software, and
- the content of assigned switching parameters being able to be selected and determined by the manufacturer of the rail vehicle in order to enable fleet management in which selected rail vehicles are adapted to specific tasks according to the specification of the customer-specific requirements profile,
- in which the switching parameters can be transmitted to the selected rail vehicle in encrypted form and in a manner specific to the individual vehicle,
- in which an individual identification number of the rail vehicle can be used for the encryption which is specific to the individual vehicle, with the result that only the selected rail vehicle is able to carry out the decryption in the vehicle in order to apply the switching parameters.

12. Rail vehicle according to Claim 11, in which the optional function can be activated and/or deactivated in a rail vehicle which is in operation.

13. Rail vehicle according to Claim 11 or 12, in which the switching parameter can be determined using software-supported tools which allow only a permissible switching parameter selection for corresponding functions.

14. Rail vehicle according to one of Claims 11 to 13, in which switching parameters are stored individually or in the form of a file which can be directly processed by control devices of the selected rail vehicle.

15. Rail vehicle according to Claim 14, in which switching parameters are encrypted, with the result that decryption can be carried out solely by the selected rail vehicle.

16. Rail vehicle according to one of Claims 11 to 15, in which switching parameters can be transmitted via a communication channel
- and via an interface to a service engineer who updates the control software in the selected rail vehicle, or
- can be transmitted directly to the selected rail vehicle, the control devices thereof automatically implementing said switching parameters in the control software.

17. Rail vehicle according to one of Claims 11 to 16, in which control devices of the rail vehicle are switched during start-up in such a manner that they inquire, at a central entity of the rail vehicle or at a landside control station, whether there are new switching parameters for the associated rail vehicle.

## Revendications

1. Procédé de configuration d'un logiciel de commande pour un véhicule ferroviaire,
- dans lequel dans un logiciel de commande, qui est destiné à une pluralité de véhicules ferroviaires, sont mises en oeuvre des fonctions de base qui sont nécessaires pour le fonctionnement de base des véhicules ferroviaires,
- dans lequel dans le logiciel de commande sont mises en oeuvre des fonctions facultatives qui sont nécessaires pour exécuter une pluralité de profils d'exigences spécifiques au client,
- dans lequel les fonctions de base et les fonctions facultatives sont testées, validées et approuvées en termes de caractéristiques, de combinaisons et de processus de fonctionnement, avant la mise en oeuvre du logiciel de commande dans les véhicules ferroviaires,
- dans lequel les fonctions de base et les fonctions facultatives en tant que logiciel de commande sont ensuite mises en oeuvre dans les véhicules ferroviaires,
- dans lequel pour un véhicule ferroviaire sélectionné, au moins une fonction facultative est activée resp. désactivée en utilisant un paramètre de commutation qui est associé individuellement à la fonction facultative,
- dans lequel le paramètre de commutation requis à cet effet en se basant sur un profil d'exigences spécial spécifique au client est établi en dehors du véhicule ferroviaire et transmis ensuite au véhicule ferroviaire sélectionné,
- dans lequel des paramètres de commutation associés sont sélectionnés et fixés en termes de contenu du côté du fabricant du véhicule ferroviaire pour permettre une gestion de flotte, dans lequel des véhicules ferroviaires sélectionnés sont adaptés aux tâches spécifiques conformément au profil d'exigences spécifique au client,
- dans lequel la transmission de paramètres de commutation au véhicule ferroviaire sélectionné s'effectue d'une manière cryptée spécifiquement à un véhicule individuel,
- dans lequel un numéro d'identification individuel du véhicule ferroviaire est utilisé pour le cryptage spécifique à un véhicule individuel de sorte que seul le véhicule ferroviaire sélectionné est en mesure d'exécuter le décryptage côté véhicule pour appliquer les paramètres de commutation.

2. Procédé selon la revendication 1, dans lequel l'activation resp. la désactivation de la fonction facultative a lieu dans un véhicule ferroviaire qui se trouve en fonctionnement opérationnel.

3. Procédé selon l'une des revendications précédentes, dans lequel la fixation du paramètre de commutation se fait en utilisant des outils assistés par logiciel qui permet uniquement une sélection de paramètres de commutation admissible pour des fonctions correspondantes.

4. Procédé selon l'une des revendications précédentes, dans lequel des paramètres de commutation sont enregistrés individuellement ou sous forme d'un fichier qui peut être traité directement par des appareils de commande du véhicule ferroviaire sélectionné.

5. Procédé selon la revendication 4, dans lequel des paramètres de commutation sont cryptés de sorte qu'un décryptage peut être effectué exclusivement du côté du véhicule ferroviaire sélectionné.

6. Procédé selon l'une des revendications précédentes, dans lequel des paramètres de commutation sont transmis par un canal de communication
- et par une interface à un technicien de service qui met à jour le logiciel de commande dans le véhicule ferroviaire sélectionné, ou
- sont transmis directement au véhicule ferroviaire sélectionné, dont les appareils de commande transposent ceux-ci d'une manière automatisée dans le logiciel de commande.

7. Procédé selon l'une des revendications précédentes, dans lequel des appareils de commande du véhicule ferroviaire lors de la mise en service demandent à une station centrale du véhicule ferroviaire ou à une station de commande terrestre si de nouveaux paramètres de commutation existent pour le véhicule ferroviaire correspondant.

8. Procédé selon la revendication 7, dans lequel la demande est coordonnée à l'aide d'un gestionnaire de commutation pour permettre une activation resp. désactivation coordonnée de fonctions facultatives ou de paramètres de commutation dans des fonctions facultatives correspondantes.

9. Procédé selon l'une des revendications précédentes, dans lequel l'activation resp. désactivation des fonctions facultatives a lieu dans un état sûr du véhicule ferroviaire, de préférence à l'arrêt ou dans un environnement de véhicule défini à l'avance.

10. Procédé selon l'une des revendications précédentes, dans lequel un droit de veto est ménagé au conducteur du véhicule ferroviaire pour refuser une configuration de logiciel de commande concernant la fonction facultative.

11. Véhicule ferroviaire avec un logiciel de commande,
- dans lequel le logiciel de commande, qui est destiné à une pluralité de véhicules ferroviaires, présente des fonctions de base qui sont destinées au fonctionnement de base du véhicule ferroviaire,
- dans lequel le logiciel de commande présente des fonctions facultatives qui sont destinées à exécuter une pluralité de profils d'exigences spécifiques au client,
- dans lequel les fonctions de base et les fonctions facultatives ont été testées, validées et approuvées en termes de caractéristiques, de combinaisons et de processus de fonctionnement avant une mise en oeuvre du logiciel de commande dans le véhicule ferroviaire,
- dans lequel au moins une fonction facultative peut être activée resp. désactivée en utilisant un paramètre de commutation qui est associé individuellement à la fonction facultative,
- dans lequel le paramètre de commutation requis à cet effet en se basant sur un profil d'exigences spécial spécifique au client peut être établi en dehors du véhicule ferroviaire et peut être transmis ensuite au véhicule ferroviaire sélectionné pour la configuration du logiciel de commande, et
- dans lequel des paramètres de commutation associés peuvent être sélectionnés et fixés en termes de contenu du côté du fabricant du véhicule ferroviaire pour permettre une gestion de flotte, dans lequel des véhicules ferroviaires sélectionnés sont adaptés à des tâches spécifiques conformément au profil d'exigences spécifique au client,
- dans lequel la transmission de paramètres de commutation au véhicule ferroviaire sélectionné peut être effectuée d'une manière cryptée spécifiquement à un véhicule individuel,
- dans lequel un numéro d'identification individuel du véhicule ferroviaire peut être utilisé pour le cryptage spécifique à un véhicule individuel de sorte que seul le véhicule ferroviaire sélectionné est en mesure d'exécuter le décryptage côté véhicule pour appliquer les paramètres de commutation.

12. Véhicule ferroviaire selon la revendication 11, dans lequel l'activation resp. désactivation de la fonction facultative peut être entreprise dans un véhicule ferroviaire qui se trouve en fonctionnement opérationnel.

13. Véhicule ferroviaire selon la revendication 11 ou 12, dans lequel la fixation du paramètre de commutation peut être effectuée en utilisant des outils assistés par logiciel qui permettent uniquement une sélection de paramètres de commutation admissible pour des fonctions correspondantes.

14. Véhicule ferroviaire selon l'une des revendications 11 à 13, dans lequel des paramètres de commutation sont enregistrés individuellement ou sous forme d'un fichier qui peut être traité directement par des appareils de commande du véhicule ferroviaire sélectionné.

15. Véhicule ferroviaire selon la revendication 14, dans lequel des paramètres de commutation sont cryptés de sorte qu'un décryptage peut être effectué exclusivement du côté du véhicule ferroviaire sélectionné.

16. Véhicule ferroviaire selon l'une des revendications 11 à 15, dans lequel des paramètres de commutation peuvent être transmis par un canal de communication
- et par une interface à un technicien de service qui met à jour le logiciel de commande dans le véhicule ferroviaire sélectionné, ou
- peuvent être transmis directement au véhicule ferroviaire sélectionné, dont les appareils de commande transposent ceux-ci d'une manière automatisée dans le logiciel de commande.

17. Véhicule ferroviaire selon l'une des revendications 11 à 16, dans lequel des appareils de commande du véhicule ferroviaire lors de la mise en service sont commutés d'une manière telle que ceux-ci demandent à une station centrale du véhicule ferroviaire ou à une station de commande terrestre si de nouveaux paramètres de commutation existent pour le véhicule ferroviaire correspondant.
